Europäisches Patentamt

European Patent Office

Office européen des brevets

(19)

(11) Numéro de publication : **0 006 044**
**B1**

(12) **FASCICULE DE BREVET EUROPÉEN**

(45) Date de publication du fascicule du brevet :
30.09.81

(51) Int. Cl.³ : **C 03 B 37/02**, C 03 C 13/00,
C 03 C 15/00, G 02 B 5/14

(21) Numéro de dépôt : 79400308.7

(22) Date de dépôt : 16.05.79

(54) **Procédé de fabrication de fibres optiques à gradient radial d'indice de réfraction.**

(30) Priorité : 30.05.78 FR 7816035

(43) Date de publication de la demande :
12.12.79 (Bulletin 79/25)

(45) Mention de la délivrance du brevet :
30.09.81 Bulletin 81/39

(84) Etats contractants désignés :
DE GB IT NL SE

(56) Documents cités :
FR - A - 2 021 614
FR - A - 2 178 038
FR - A - 2 227 234
FR - A - 2 301 489
FR - A - 2 368 444

NTG-FACHBERICHTE, vol. 59, 1977 Third European Conference on Optical Communication, 14-16 septembre 1977, MUNICH (VDE-Verlag, Berlin) A. DE PANAFIEU et al. « Direct fabrication of medium-loss graded-index preforms by the phase separation and leaching technique », pages 21-23

(73) Titulaire : THOMSON-CSF
173, Boulevard Haussmann
F-75360 Paris Cedex 08 (FR)

(72) Inventeur : De Panafieu, Arnaud
"THOMSON-CSF" - SCPI 173, bld Haussmann
F-75360 Paris Cedex 08 (FR)
Inventeur : Baylac, Christiane
"THOMSON-CSF" - SCPI 173, bld Haussman
F-75360 Paris Cedex 08 (FR)
Inventeur : Nemaud, Yves
"THOMSON-CSF" - SCPI 173, bld Haussmann
F-75360 Paris Cedex 08 (FR)
Inventeur : Turpin, Marc
"THOMSON-CSF" - SCPI 173, bld Haussmann
F-75360 Paris Cedex 08 (FR)
Inventeur : Faure, Michel
"THOMSON-CSF" - SCPI 173, bld Haussmann
F-75360 Paris Cedex 08 (FR)

(74) Mandataire : Giraud, Pierre et al
"THOMSON-CSF" - SCPI 173, bld Haussmann
F-75360 Paris Cedex 08 (FR)

Imprimerie Jouve, 17, rue du Louvre, 75001 Paris, France

Procédé de fabrication de fibres optiques à gradient radial d'indice de réfraction

L'invention se rapporte aux fibres de verre conductrices de la lumière de faible atténuation et particulièrement aux fibres présentant un gradient radial d'indice de réfraction, utilisées notamment dans les télécommunications optiques.

On connaît les fibres optiques dites « à saut d'indice », constituées d'un cœur en verre, de géométrie cylindrique, entouré par une gaine extérieure, généralement en verre, qui a un indice de réfraction inférieur à celui du cœur. La lumière se propage à l'intérieur du cœur en restant piégée dans la fibre par suite des réflexions totales à l'interface entre le cœur et la gaine.

On connaît également les fibres optiques dites « à gradient d'indice » où l'indice de réfraction du cœur décroît lorsqu'on va de l'axe à l'interface cœur-gaine suivant une loi pseudo-parabolique. Un tel profil de l'indice de réfraction rend minimal l'élargissement temporel d'une impulsion lumineuse voyageant le long de la fibre et agrandit donc au maximum la bande passante de celle-ci. En pratique, on peut tolérer dans la région centrale du cœur une déviation par rapport à la loi pseudo-parabolique sans que ce soit trop au détriment de la bande passante.

Les procédés de fabrication de fibres optiques de faible atténuation et de large bande passante doivent résoudre deux principaux problèmes :

Premier problème : réaliser des verres très purs, contenant une proportion inférieure à $10^{-7}$ de certaines impuretés, telles certains métaux de transition, qui absorbent fortement la lumière dans le domaine du proche infra-rouge.

Deuxième problème : obtenir la décroissance radiale désirée de l'indice de réfraction dans le cœur, en faisant varier radialement la composition chimique du verre d'une manière contrôlée.

En pratique, pour obtenir une fibre optique satisfaisant aux conditions de pureté et de gradient radial rappelées ci-dessus, une méthode consiste à fabriquer une baguette de verre également appelée préforme ou ébauche satisfaisant à ces conditions. La fibre optique est ensuite obtenue à partir de la baguette par simple étirage à chaud (fibrage). A condition d'éviter toute pollution au moment du fibrage, la pureté de la fibre est équivalente à celle de la baguette. De même, le gradient radial de la fibre reproduit celui de la baguette.

Les techniques actuelles d'obtention de baguettes satisfaisant aux conditions posées ci-dessus présentent certains inconvénients.

Pour les méthodes consistant à partir de matières premières très pures (moins de $10^{-7}$ d'impuretés) c'est leur coût élevé qui constitue l'inconvénient principal, ainsi que la contamination possible du verre pendant son élaboration.

Dans d'autres méthodes, on part de matières premières moins pures ($10^{-6}$ à $10^{-4}$ d'impuretés), on fabrique une baguette avec ces matières premières puis on soumet le verre de cette baguette à un traitement de purification comportant plusieurs étapes, incluant la séparation en deux phases interconnectées et continues, l'élimination de la phase ayant recueilli le plus d'impuretés et la consolidation (fermeture des pores) du verre poreux ainsi obtenu. Un inconvénient de telles méthodes provient de ce que, pour obtenir un gradient radial, on doit ajouter dans les pores un élément dopant, modificateur de l'indice de réfraction. L'adjonction d'un tel dopant constitue une étape supplémentaire qui complique le procédé. Par ailleurs, le dopant demeure inclus dans le verre en fin de traitement et doit donc être extrêmement pur (moins de $10^{-7}$ d'impuretés) ce qui est d'autant plus coûteux que les quantités de dopant sont, dans cette technologie, relativement importantes (de l'ordre de 5 % ou plus).

Dans le brevet français N° 2 368 444, on décrit un procédé qui permet d'obtenir directement par les étapes de purification sus-mentionnées et sans adjonction ultérieure d'un dopant, des préformes purifiées qui présentent un gradient radial de l'indice de réfraction.

Ce procédé comporte :

— un premier stade consistant à mélanger des matières premières susceptibles d'entrer dans une composition verrière présentant le phénomène de séparation en deux phases solides interconnectées et continues de compositions différentes, lesdites matières premières comprenant des oxydes de silicium, de bore et de sodium (ou des oxydes de silicium, de bore, de sodium et de potassium) et des matières complémentaires comprenant au moins un des oxydes des corps suivants : germanium, titane, phosphore et aluminium, lesdites matières premières et complémentaires présentant un taux d'impureté inférieur à $10^{-5}$ calculé en tenant compte des proportions molaires d'oxydes de métaux dits de transition, ledit premier stade comprenant ensuite la préparation d'un bain de verre en fusion ;

— un deuxième stade comportant une première étape de tirage de l'ébauche à une vitesse prédéterminée à partir du bain de verre à travers un dispositif de refroidissement à gradient thermique prédéterminé, et une deuxième étape comprenant au moins un recuit thermique ;

— un troisième stade comportant au moins un lessivage éliminant la phase contenant le plus d'impuretés, et un traitement thermique de consolidation de l'ébauche.

Les fibres obtenues par fibrage de ces ébauches présentent toutefois deux inconvénients :

— l'indice de réfraction décroît bien de manière continue de l'axe à la périphérie mais la fibre a seulement un cœur à gradient d'indice et pas de gaine optique. L'absence de gaine optique est une source de pertes de lumière car les rayons lumineux se propageant dans la fibre viennent au contact de la surface de la fibre où ils sont en partie diffusés par les imperfections (poussières, micro-cassures, etc.) présentes à l'interface verre/air ;

— la variation radiale de l'indice de réfraction n'est pas exactement celle (pseudo-parabolique) qui rend maximale la bande passante de la fibre.

La présente invention vise notamment à pallier ces deux inconvénients. Elle permet par les étapes de purification sus-mentionnées et sans adjonction ultérieure d'un dopant de produire des préformes présentant un cœur où l'indice de réfraction décroît radialement suivant une loi pseudo-parabolique et une gaine extérieure d'indice de réfraction inférieur à celui du cœur.

Dans le procédé selon l'invention, on élabore dans un premier stade un verre à partir de matières premières pouvant contenir une certaine proportion d'impuretés (moins de $1.10^{-4}$). Ces matières premières sont choisies de manière à favoriser la séparation du verre en deux phases au cours des traitements ultérieurs. La phase dure, destinée à être conservée dans le verre final est riche en silice. La phase douce, destinée à être éliminée est pauvre en silice et contient la majeure partie des impuretés. Certaines de ces matières premières constituent un dopant, c'est-à-dire un corps, qui, tel l'oxyde de germanium, peut augmenter l'indice de réfraction du verre.

Dans un deuxième stade, on tire une baguette à partir du verre en fusion et l'on procède ensuite à un recuit thermique provoquant la formation à l'échelle microscopique de deux phases vitreuses interconnectées de compositions chimiques différentes.

Dans un troisième stade on attaque à cœur la phase douce par une solution acide pour éliminer les impuretés, tout en laissant le dopant issu de la phase douce en proportion croissante, comme résidu d'attaque, quand on va de la superficie au cœur de l'ébauche. On procède ensuite à une attaque chimique à faible profondeur dite « périphérique » pour diminuer la concentration en dopant de la région externe de l'ébauche.

Dans un quatrième stade on procède au traitement thermique de consolidation de l'ébauche pour faire disparaître les porosités résultant de l'élimination de la phase douce.

Selon une autre caractéristique de l'invention, les matières premières utilisées dans le premier stade comprennent :

— des matières de base des verres dits « séparables » en deux phases solides interconnectées et continues de compositions différentes, verres constitués notamment par des oxydes de bore, silicium, sodium, éventuellement potassium, destinés à engendrer la séparation en deux phases solides au cours des traitements ultérieurs. Les proportions molaires sont par exemple :

— 35 à 70 % de $SiO_2$ ;
— 17 à 42 % de $B_2O_3$ ;
— 4 à 15 % de $Na_2O$ (ou mélange de $Na_2O$ avec $K_2O$) ;

— des matières complémentaires ou « dopants » comportant notamment au moins un des oxydes des corps suivants : germanium, titane, phosphore et aluminium. Les proportions molaires sont par exemple les suivantes :

— 0 à 5 % d'$Al_2O_3$ ;
— 0 à 10 % de $TiO_2$ ;
— 0 à 10 % de $P_2O_5$ ;
— 9 à 15 % de $GeO_2$.

Parmi les avantages de l'invention, on peut signaler la diminution des prix de revient due à l'utilisation de matières premières dont le taux d'impureté peut être supérieur environ d'un facteur 1000 à celui qui est exigé au stade final. En particulier, il n'est pas nécessaire d'introduire un dopant purifié et coûteux à l'intérieur des pores pour créer la variation radiale souhaitée de l'indice de réfraction.

L'invention sera mieux comprise, et d'autres caractéristiques apparaîtront, au moyen de la description qui suit, et des dessins qui l'accompagnent, parmi lesquels :

la figure 1 est un diagramme de phase ;

la figure 2 montre la variation radiale de concentration en dopant du verre poreux obtenue pour trois durées différentes d'attaque chimique à cœur (3ème stade) ;

la figure 3 est un diagramme montrant la variation radiale de concentration en dopant du verre consolidé ayant subi l'attaque chimique périphérique. L'indice de réfraction du verre consolidé (4ème stade) suit pratiquement la même loi.

A titre d'exemple on part des oxydes suivants avec les proportions molaires ci-après (en pourcentage) :

— $SiO_2$ (35 à 70 %) ;
— $GeO_2$ (5 à 15 %) ;
— $B_2O_3$ (17 à 42 %) ;
— $Na_2O$ (4 à 15 %).

Le mélange d'oxydes en fusion se comporte comme un système pseudo-binaire de phases (liquides ou solides) :

— $Na_2O + xB_2O_3$
— $SiO_2 + yGeO_2$

avec x et y étant choisis une fois pour toutes lors de la préparation du mélange.

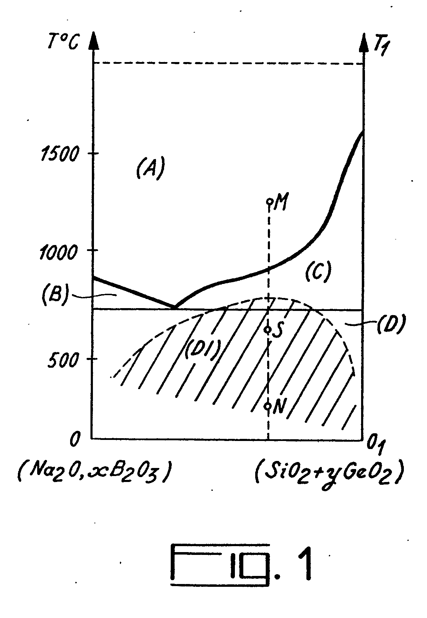

Figure 1, on a représenté un exemple possible de diagramme de phases où l'on a porté en abscisses les compositions comme dans un diagramme binaire, et en ordonnées les températures.

On aura par exemple les domaines suivants :

— domaine (A), où l'on a une seule phase liquide,

— domaine (B) et domaine (C), où l'on a une phase liquide et une phase solide de compositions différentes,

— domaine (D) comportant une ou deux phases solides suivant que l'on est en dehors ou en dedans d'un domaine d'immiscibilité (D.I.) pouvant d'ailleurs empiéter sur les domaines voisins.

L'apparition de deux phases solides distinctes qui s'interpénètrent se produit notamment en opérant de la façon suivante :

— on part d'un point M du domaine (A), c'est-à-dire d'un bain en fusion, de composition donnée par l'abscisse du point M, et de température donnée par l'ordonnée du point M ;

— on refroidit ensuite suivant un segment MN, en opérant par exemple, par trempage ;

— on remonte la température en parcourant le segment NS, puis on stabilise la température (recuit thermique). Au cours de ce recuit, il se forme deux phases solides interconnectées ; c'est-à-dire que deux éléments d'une même phase communiquent entre eux et avec l'extérieur de l'échantillon (réseau de type ouvert). C'est d'ailleurs, en raison de cette particularité que l'on peut facilement éliminer entièrement l'une des phases solides. La même particularité est mise à profit dans le cadre de l'invention, ainsi que le fait que les impuretés se groupent en majorité dans l'une des phases que l'on élimine ensuite, ce qui permet d'obtenir un verre résiduel beaucoup plus pur que le verre initial.

Premier stade du procédé : c'est la fusion du mélange d'oxydes défini plus haut. On rappelle que ces oxydes doivent comporter typiquement moins de $10^{-4}$ d'impuretés gênantes, celles-ci étant constituées essentiellement par certains métaux dits « de transition » (fer, cuivre, nickel...). Les autres impuretés, telles que l'eau ou les produits organiques peuvent être en proportion supérieure.

La fusion peut être effectuée par tout moyen classique n'apportant pas d'impureté gênante. On utilisera de préférence un creuset en platine rhodié placé dans un four capable de monter à une température de 1 400 °C.

Deuxième stade du procédé : il comporte la mise en forme de l'ébauche et le recuit thermique. Le verre est mis sous forme d'ébauches allongées, baguettes pleines ou creuses (dimensions radiales de l'ordre de 6 mm représentant soit le diamètre d'une ébauche pleine soit l'épaisseur d'une ébauche creuse) obtenues par exemple, par tirage de bas en haut à partir du verre fondu contenu dans un creuset. Une amorce façonnée de manière à prendre une forme de baguette pleine ou creuse, permet de retirer progressivement du bain une ébauche ayant la forme désirée. L'amorce est montée à l'extrémité d'une tige facilitant la traction à travers un refroidisseur donnant un gradient thermique à grande valeur absolue sur un intervalle de température considérable (de 1 000 °C à 450 °C par exemple).

A titre de variante du procédé de mise en forme, on peut tirer l'ébauche par un trou percé dans le fond du creuset (procédé dit par filière ou extrusion) en exerçant si nécessaire une pression sur la surface libre du bain.

A titre d'exemple, on obtient de bons résultats avec les données ci-après :

— température du verre dans le creuset : 1 000 °C ;

— gradient thermique dans le refroidisseur : 15 °C par mm ;

— vitesse de tirage : 20 mm par minute ;

— composition du verre en moles pour cent :

$SiO_2$ : 57 %

$GeO_2$ : 10 %

$B_2O_3$ : 25 %

$Na_2O$ : 8 %.

L'étape du tirage est suivie d'une étape de recuit thermique décrite ci-après :

Cette étape est nécessaire, car la texture de séparation de phases obtenue après l'étape d'étirage est trop fine pour permettre l'élimination par lessivage sélectif de la phase ayant recueilli la majeure partie des impuretés sans casser l'ébauche. Le recuit thermique a donc pour but de faire grossir cette texture.

Le recuit thermique est effectué à une température comprise entre 500 °C et 600 °C pendant une durée allant de une à plusieurs heures. Pendant ce recuit, on assiste à un réarrangement atomique de manière à former deux phases : une phase à caractère covalent, dite phase dure, qui est très riche en silice (typiquement de l'ordre de 85 %) ; une phase à caractère ionique, dite phase douce, qui est pauvre en silice et riche en $Na_2O$ et $B_2O_3$. Le dopant (un ou plusieurs oxydes) se répartit entre les deux phases ; en revanche, les métaux de transition se retrouvent préférentiellement dans la phase douce.

Troisième stade du procédé : c'est l'attaque chimique du verre de base pour éliminer les impuretés et créer dans l'ébauche une zone externe pauvre en dopant et une zone centrale où le dopant est distribué suivant une loi pseudo-parabolique.

L'attaque chimique du verre de base comprend au moins deux étapes (successives ou simultanées) :

a) attaque chimique à cœur : l'attaque de la phase douce se fait en immergeant le verre recuit et refroidi dans une solution acide choisie pour qu'elle ne réagisse pas avec la même cinétique sur les différents oxydes formant la phase douce. Par exemple, quand $GeO_2$ seul est le dopant, on peut choisir une solution aqueuse normale d'HCl à 95 °C qui attaque rapidement les oxydes $B_2O_3$, $Na_2O$ (et éventuellement $K_2O$) et les métaux de transition mais qui n'attaque pratiquement pas $SiO_2$ et n'attaque $GeO_2$ que progressivement. On obtient ainsi un verre poreux purifié où la concentration en dopant (laissé comme résidu d'attaque) augmente graduellement de la zone externe à la zone interne de l'ébauche.

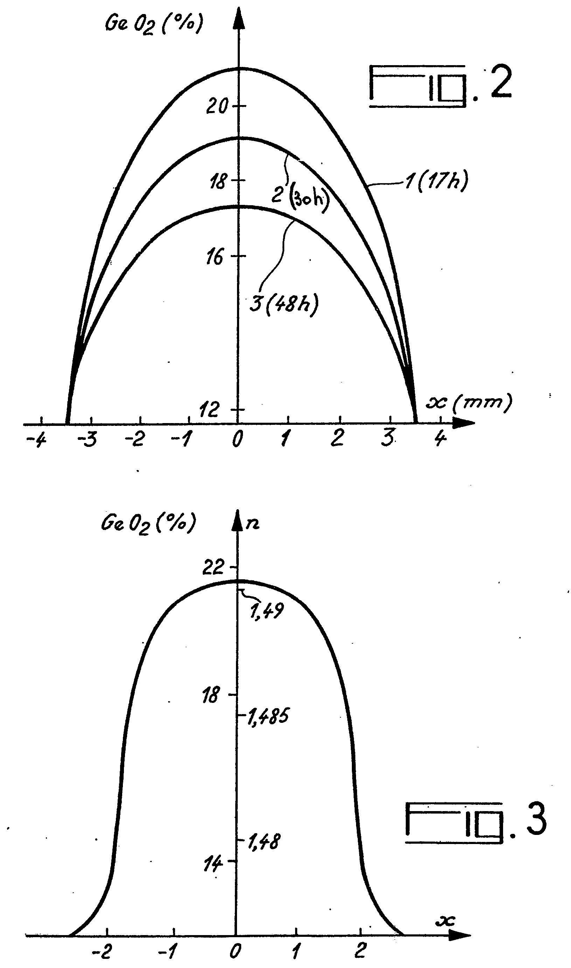

En variant le temps de l'attaque, on peut donc laisser une quantité plus ou moins grande de dopant comme résidu d'attaque à l'intérieur des pores ; figure 2, on a illustré des exemples typiques qui peuvent être obtenus pour différents temps d'attaque chimique à cœur. En plus du temps et de la nature de l'acide, la concentration de la solution en moles d'acide et la température sont également des paramètres que l'on peut faire varier pour laisser une quantité plus ou moins importante de dopant comme résidu d'attaque. La concentration d'acide peut varier entre 0,1 N et 5 N et la température entre 70 °C et 100 °C.

b) attaque chimique périphérique : le contrôle du profil radial de concentration en dopant peut se faire en immergeant pendant un temps contrôlé l'ébauche poreuse (ou partiellement poreuse) dans un solvant du dopant de manière à créer dans l'ébauche une zone externe pauvre en dopant et éventuellement de manière à modifier la variation de concentration en dopant dans la zone centrale et la rendre plus proche d'une variation pseudo-parabolique. Quand $GeO_2$ est le dopant on peut utiliser des solutions aqueuses d'ammoniaque de concentration 0,1 % à 10 % en poids. La soude diluée (0,01 à 1 % en poids) peut également être utilisée mais comme elle attaque aussi la phase dure, la surface de l'ébauche consolidée doit être polie pour obtenir des fibres ayant une résistance mécanique convenable.

Le troisième stade est susceptible d'être modifié selon plusieurs variantes :

Première variante : au cours de l'étape (b), pour augmenter la solubilité du dopant en périphérie, on forme d'abord un complexe que l'on dissout ensuite dans un solvant approprié. Quand $GeO_2$ est le dopant, on peut, par exemple, former de l'acide thiodigermanique ($H_2Ge_2S_5$) en immergeant l'ébauche poreuse, préalablement séchée, dans de l'alcool contenant de l'hydrogène sulfuré. L'acide est ensuite rincé à l'eau.

Deuxième variante : au cours de l'étape (b), on peut favoriser l'attaque et la dissolution concomitante du dopant en modifiant le nombre de valence ou le nombre de coordination de l'ion dopant. Par exemple. l'acide hypophosphoreux réduit l'état de valence de l'ion germanium de 4 à 2 et rend ainsi cet ion plus soluble dans l'acide chlorhydrique, qui peut être l'agent d'attaque de l'étape (b).

Troisième variante : on peut interrompre l'attaque de la phase douce, pour éliminer avec un solvant approprié le dopant laissé comme résidu d'attaque dans la zone externe poreuse de l'ébauche. On reprend ensuite l'attaque de la phase douce et on la mène à cœur.

Quatrième variante : on peut procéder aux attaques (a) et (b) simultanément en utilisant une première solution qui laisse peu de dopant comme résidu d'attaque remplacée avant que l'attaque soit à cœur par une deuxième solution qui attaque peu le dopant, les deux solutions différant par au moins un des paramètres suivants : nature de la solution, concentration ou température.

Cinquième variante : on peut procéder à l'étape (a) en phase liquide, comme il a été décrit, mais procéder à l'étape (b) d'attaque périphérique par réaction en phase gazeuse. On fait agir à chaud des vapeurs de chlorures (par exemple de tétrachlorure de carbone à 500 °C) sur le verre poreux. Les réactifs gazeux agissent en diffusant à l'intérieur de la baguette.

Quatrième stade du procédé : ce stade comporte deux étapes consécutives :

a) le séchage de l'ébauche poreuse par un traitement thermique complexe ;

b) la consolidation de l'ébauche poreuse de manière à faire disparaître les pores créés par l'élimination de la phase douce.

Au cours de l'étape (a), l'ébauche poreuse, soigneusement rincée avec de l'eau désionisée, est ensuite séchée en deux sous-étapes :
— préséchage, par exemple sous flux de gaz sec ou sous vide ;
— séchage consistant à porter progressivement l'ébauche à une température comprise entre 500 °C et 750 °C et à la maintenir à cette température pendant une durée de plusieurs heures à plusieurs jours.

Au cours de l'étape (b), l'ébauche est consolidée en élevant progressivement la température à une valeur typiquement comprise entre 700 et 1 200 °C suffisante pour provoquer l'affaissement des pores. On peut également pour provoquer la consolidation translater un four de faible longueur, le long de l'ébauche (la température du four dans ce cas est également comprise entre 700 et 1 200. °C). La durée de cette étape peut varier d'une à plusieurs heures.

Certaines des impuretés subsistant dans la phase dure peuvent exister dans plusieurs états de valence. Suivant la nature de ces impuretés, il peut être souhaitable de modifier leur degré d'oxydation. Par exemple, l'ion ferreux $Fe^{++}$, qui présente un maximum d'absorption pour les longueurs d'onde de l'ordre de 11 000 Å est spécialement néfaste pour les fibres optiques, alors que l'ion ferrique $Fe^{+++}$ absorbe très peu la lumière pour des longueurs d'onde supérieures à 6 000 Å.

Etant donné le grand rapport surface/poids (de l'ordre de 100 m²/g) du squelette poreux, il est aisé, pour diminuer l'absorption du verre purifié, de modifier le degré d'oxydation des impuretés résiduelles en contrôlant l'atmosphère du four lors de la consolidation.

On étire directement la fibre à partir de l'ébauche et l'on obtient un produit qui conserve à la fois la pureté et le gradient radial de composition chimique et par conséquent le gradient d'indice de réfraction de l'ébauche.

A titre de variante, on peut également appliquer le procédé à des ébauches tubulaires. L'avantage de l'ébauche tubulaire est qu'elle permet d'attaquer à cœur une plus grande masse de verre pour une même longueur d'ébauche, l'épaisseur du verre entre parois interne et externe étant de même ordre que le diamètre d'une ébauche pleine (typiquement 4 à 8 mm). On peut ainsi accroître la longueur de fibre produite à partir d'une même ébauche. On peut atteindre par exemple, une dizaine de kilomètres.

Dans le cas de cette variante (ébauche tubulaire) les premier, deuxième et quatrième stades du procédé sont inchangés, par contre lors du troisième stade, l'étape (a) peut se faire en attaquant à la fois par les surfaces interne et externe de l'ébauche, alors que l'étape (b) ne doit se faire qu'en attaquant seulement la surface externe. Après le quatrième stade, on peut fermer le tube par affaissement de la paroi interne en chauffant l'ébauche au chalumeau sur un tour verrier, de manière à transformer l'ébauche tubulaire en ébauche pleine. La fibre obtenue par étirage de la préforme présente une zone centrale où la concentration en dopant (et donc l'indice de réfraction), diminue, mais ce « creux d'indice » n'empêche pas d'obtenir des fibres de large bande passante, supérieure à 300 MHz, pour 1 km.

A titre de variante du procédé, à la fin du quatrième stade on peut introduire la baguette consolidée à l'intérieur d'un tube riche en silice (typiquement 90 %) dont le diamètre intérieur a été ajusté au diamètre de la baguette. On étire alors l'ensemble baguette-tube pour obtenir une fibre optique qui présente une âme en verre purifié et une gaine périphérique plus riche en silice. La gaine périphérique de la fibre ne participant pas au guidage de la lumière peut être constituée d'un verre beaucoup moins pur absorbant fortement la lumière. L'avantage de cette variante est que pour une même longueur de baguette purifiée, elle permet de produire une plus grande longueur de fibre optique.

On a décrit ci-après quelques exemples de modes opératoires :

Exemple 1 — On procède à l'élaboration d'un verre comportant en pourcentage molaire 57 % $SiO_2$, 10 % $GeO_2$, 25 % $B_2O_3$ et 8 % $Na_2O$ en partant de matières premières contenant moins de $10^{-4}$ de métaux de transition. Le verre est ensuite étiré en une baguette pleine de diamètre 6,5 mm. La baguette (ou ébauche) est recuite à l'air à 550° pendant trois heures. L'ébauche refroidie est alors immergée dans une solution d'acide chlorhydrique de normalité 3 à 95 °C pendant 24 heures pour attaquer à cœur la phase douce. La baguette poreuse est alors rincée à l'eau désionisée puis immergée dans une solution d'ammoniaque de normalité 1 à 50 °C pendant une heure, pour diminuer la concentration en dopant à la périphérie. La baguette est alors rincée soigneusement avec de l'eau désionisée puis séchée en la maintenant sous flux d'azote sec à une température montée progressivement de la température ambiante à 680 °C à la vitesse de 15 °C par heure. La baguette est maintenue 6 heures à cette température, puis l'azote est remplacé par de l'oxygène et la température de l'ébauche est portée à 880 °C à la vitesse de 15 °C par heure pour provoquer la consolidation. La préforme obtenue est alors étirée à 1 450 °C pour produire une fibre de diamètre 150 μm. Le cœur de la fibre a un diamètre de 120 μm et la différence d'indice entre l'axe et la surface est de 0,012.

Exemple 2 — On procède jusqu'à l'étape du recuit comme dans l'exemple 1 ci-dessus. L'ébauche recuite et refroidie est alors immergée pendant deux heures dans une solution 0,6 N d'acide chlorhydrique à 95 °C. Après un rinçage d'une heure avec de l'eau désionisée, la baguette est immergée dans une solution normale d'ammoniaque à 22 °C pendant 24 heures. Après rinçage d'une heure, la baguette est immergée à nouveau dans une solution 3 N d'acide chlorhydrique à 95 °C pendant 24 heures. La baguette est alors rincée très soigneusement avec de l'eau désionisée puis séchée, consolidée et fibrée comme dans l'exemple 1. La fibre obtenue a une différence d'indice de 0,015 entre l'axe et la surface.

Exemple 3 — On procède comme dans l'exemple 1 jusqu'à l'étape du recuit. L'ébauche recuite et refroidie est alors immergée pendant une heure dans une solution aqueuse à 95 °C comprenant une mole par litre d'acide chlorhydrique et une mole par litre d'acide hypo-phosphoreux. La baguette est alors rincée pendant une heure, puis immergée à nouveau dans une solution 3 N d'acide chlorhydrique à 95 °C pendant 24 heures. La baguette est alors rincée très soigneusement avec de l'eau désionisée puis séchée, consolidée et fibrée comme dans l'exemple 1.

Exemple 4 — On procède à l'élaboration d'un verre comportant en pourcentage molaire 57 % $SiO_2$, 3,5 % $Al_2O_3$, 6,5 % $P_2O_5$, 25 % $B_2O_3$ et 8 % $Na_2O$ en partant de matières premières contenant moins de $10^{-4}$ de métaux de transition. Le verre est ensuite étiré en une baguette pleine de diamètre 6,5 mm. La baguette est recuite à l'air à 550 °C pendant deux heures. L'ébauche refroidie est immergée dans une solution normale d'acide chlorhydrique à 95 °C pendant 30 heures puis rincée soigneusement. La baguette est alors séchée en la maintenant sous flux d'azote sec à une température portée de 22 °C à 500 °C à la vitesse de 15 °C/heure. La baguette est alors maintenue pendant deux heures sous un balayage de 100 $cm^3$/minute d'azote saturé de $CCl_4$ à 500 °C. On reprend alors le balayage d'azote seul pendant 10 heures, puis l'azote est remplacé par de l'oxygène et la température est portée à 900 °C à la vitesse de 15 °C/heure, pour provoquer la consolidation. La préforme obtenue est étirée à 1 500 °C pour produire une fibre de diamètre 150 μm. Le diamètre de cœur est de 100 μm et la différence d'indice entre l'axe et la surface externe de 0,015.

Les figures 2 et 3 donnent les résultats obtenus respectivement à la fin de l'étape (a) du troisième stade et à la fin du quatrième stade, pour l'exemple 1 cité plus haut.

En abscisses, on a porté suivant un axe Ox (O étant le centre de l'ébauche) les distances radiales en millimètres, affectées du signe + ou − suivant que l'on se trouve à droite ou à gauche du centre O. En ordonnées, on a porté la concentration en $GeO_2$ qui dépasse au centre les 10 % de la composition initiale en raison de l'élimination de la phase douce très riche en $Na_2O$ et en $B_2O_3$.

Figure 2, le résultat obtenu à la fin de l'étape (a) du troisième stade correspond à trois courbes pseudo-paraboliques dont les sommets sont de plus en plus bas quand on a les durées suivantes d'attaque chimique à cœur (étape a) avec de l'acide chlorhydrique 3 N à 95 °C.

Courbe 1 : 17 heures
Courbe 2 : 30 heures
Courbe 3 : 48 heures.

Figure 3, on a représenté la courbe à la fin du quatrième stade, pour une ébauche qui a suivi le traitement de la courbe 1 (17 h), figure 2.

On voit que l'indice de réfraction décroît plus fortement à la figure 3 que sur la courbe 1 de la figure 2 quand la distance radiale augmente, mais que d'autre part la courbe s'évase à la périphérie de la baguette, par suite de l'attaque chimique de l'étape (b).

## Revendications

1. Procédé de fabrication de fibres optiques constituées d'un cœur à gradient radial d'indice de réfraction entouré d'une gaine optique, comportant la fabrication préalable d'une ébauche de diamètre supérieure à celui de la fibre, du type comportant :

— un premier stade, consistant à préparer un bain de verre en fusion à partir de matières premières susceptibles d'entrer dans une composition verrière présentant le phénomène de séparation en deux phases solides interconnectées et continues de compositions différentes, ces matières premières étant additionnées, dès le premier stade, de dopants susceptibles d'augmenter l'indice de réfraction du verre ;

— un deuxième stade comportant une première étape de tirage d'une ébauche à partir du bain de verre et une deuxième étape comprenant au moins un recuit thermique, ce dernier faisant apparaître les deux phases solides interconnectées et continues de compositions différentes, à savoir une phase dure riche en silice et une phase douce pauvre en silice, la phase douce ayant recueilli la majeure partie des impuretés du bain initial ;

— un troisième stade, comportant une attaque chimique à cœur de l'ébauche, pour éliminer la phase douce et les impuretés qu'elle contient en laissant le dopant issu de la phase douce comme résidu d'attaque de façon croissante quand on va de la périphérie au cœur de l'ébauche ;

— un quatrième stade comportant un traitement thermique de consolidation de l'ébauche, caractérisé en ce que :

— au premier stade, les matières premières présentent un taux d'impureté inférieur à $10^{-4}$, calculé en tenant compte des proportions molaires d'oxydes de métaux dits de transition ;

— le troisième stade, comporte en outre une attaque chimique superficielle pour diminuer la concentration en dopant à la périphérie de l'ébauche ;

— le quatrième stade comporte une première étape de séchage, comportant une sous-étape de préséchage et une sous-étape de séchage consistant à porter progressivement l'ébauche à une température comprise entre 500 °C et 750 °C et à la maintenir à cette température pendant une durée de plusieurs heures à plusieurs jours.

2. Procédé suivant la revendication 1, caractérisé en ce que les matières premières utilisées dans le premier stade comportent en proportions prédéterminées, des matières de base comprenant des oxydes de silicium, de bore, de sodium et éventuellement de potassium, et des matières complémentaires (ou dopants) comprenant au moins un des oxydes des corps suivants : germanium titane, phosphore ou aluminium.

3. Procédé suivant la revendication 2, caractérisé en ce que les matières premières de base sont mélangées dans les proportions suivantes : 35 à 70 % de $SiO_2$, 17 à 42 % de $B_2O_3$, 4 à 15 % de $Na_2O$.

4. Procédé suivant la revendication 2, caractérisé en ce que les matières complémentaires sont mélangées dans les proportions molaires suivantes, comptées par rapport au total des matières premières en moles :
0 à 5 % d'$Al_2O_3$, 0 à 10 % de $TiO_2$, 0 à 10 % de $P_2O_5$, 0 à 15 % de $GeO_2$.

5. Procédé suivant la revendication 2, caractérisé en ce que les matières premières mélangées au cours du premier stade correspondent à une composition verrière définie par les pourcentages molaires suivants :
— 57 % de $SiO_2$
— 25 % de $B_2O_3$
— 8 % de $Na_2O$.
— 10 % de $GeO_2$

6. Procédé suivant la revendication 1, caractérisé en ce que les solutions utilisées pour l'attaque chimique à cœur et l'attaque superficielle du troisième stade sont des solutions acides de normalités comprises entre 0,1 N et 5 N et de températures comprises entre 70 et 100 °C.

7. Procédé suivant la revendication 1, caractérisé en ce que l'attaque chimique superficielle du troisième stade est effectuée par une solution d'ammoniaque de concentration comprise entre 0,1 % et 10 % en poids.

8. Procédé suivant la revendication 1, caractérisé en ce que l'attaque chimique superficielle du troisième stade est effectuée par une solution de soude de concentration comprise entre 0,01 % et 1 % en poids.

9. Procédé suivant la revendication 1, caractérisé en ce qu'au cours du troisième stade, on procède à l'attaque périphérique de l'étape (b), en formant un complexe à partir du dopant à éliminer, puis en éliminant le complexe ainsi formé par un solvant.

10. Procédé suivant la revendication 9, caractérisé en ce que, le dopant étant de l'oxyde de germanium, le complexe est de l'acide thiodigermanique formé en immergeant le verre poreux dans de l'alcool contenant de l'hydrogène sulfuré.

11. Procédé suivant la revendication 1, caractérisé en ce qu'au cours du troisième stade, on fait agir les agents d'attaque en présence d'acide hypophosphoreux, le dopant étant de l'oxyde de germanium.

12. Procédé suivant la revendication 1, caractérisé en ce qu'au cours du troisième stade, l'étape (b) est effectuée en utilisant un agent d'attaque chimique en phase gazeuse.

13. Procédé suivant la revendication 12, caractérisé en ce que l'agent d'attaque chimique est une vapeur de chlorure.

14. Procédé suivant la revendication 13, caractérisé en ce que le chlorure est du tétrachlorure de carbone à 500 °C.

15. Procédé suivant la revendication 1, caractérisé en ce que le traitement thermique de consolidation est effectué à une température comprise entre 700 °C et 1 200 °C pendant une durée d'une à plusieurs heures.

16. Procédé suivant la revendication 1, caractérisé en ce que le quatrième stade comporte en outre avant le traitement de consolidation un traitement thermique en atmosphère contrôlée.

17. Procédé suivant la revendication 1, caractérisé en ce que l'ébauche, étant tubulaire, est traitée à la flamme après le traitement de consolidation en vue d'être transformée en ébauche pleine.

18. Procédé suivant la revendication 1, caractérisé en ce que des fibres de verre sont obtenues directement par tirage à partir de ladite ébauche consolidée.

19. Procédé suivant la revendication 1, caractérisé en ce que des fibres de verre sont obtenues par tirage à partir de l'ébauche consolidée préalablement placée dans un tube de verre riche en silice (de l'ordre de 90 %) dont le diamètre intérieur est ajusté au diamètre de ladite ébauche.

## Claims

1. Process for making optical fibres comprising a core with radial refractive index gradient which is surrounded by a light-conducting sheath, a blank having a larger diameter than that of the fibre previously being made, the process including the following steps :
— a first stage of the production of a glass melt proceeding from starting materials which can form a glass composition which separates into two solid interconnected continuous phases of different composition, said starting materials being mixed in the first stage with doping agents which can increase the refractive index of the glass ;
— a second stage comprising a first step of the drawing of a blank from the glass melt and a second step comprising at least one heat treatment, the latter causing the two solid interconnected and continuous phases of different composition to occur, that is a hard phase rich in silicon dioxide and a soft phase poor in silicon dioxide, the soft phase taking up the major part of the impurities of the starting melt ;
— a third stage comprising a chemical attack in the core of the blank for removing the soft phase and the impurities contained therein, leaving the doping agent originating from the soft phase as residue of the chemical attack, the doping agent increasing going from the outside to the core of the blank ;
— a fourth stage comprising a heat treatment for consolidating the blank, characterised in that :
— in the first stage the starting materials have an impurity content of less than $10^{-4}$ calculated taking account of the molar proportions of oxides of so called transition metals ;
— the third stage also includes a chemical surface attack for reducing the concentration of doping agent at the periphery of the blank ;
— the fourth stage includes a first drying step comprising a predrying sub-stage and a drying sub-stage, the blank being brought progressively to a temperature between 500 and 750 °C and being held at this temperature for several hours to several days.

2. Process according to Claim 1, characterised in that the starting materials used in the first stage include predetermined amounts of basic materials consisting of silicon, boron, sodium and possibly potassium oxide and additives (or doping agents) consisting of at least one oxide of germanium, titanium, phosphorus and aluminium.

3. Process according to Claim 2, characterised in that the starting materials are mixed in the following proportions :
35-70 % $SiO_2$, 17-42 % $B_2O_3$, 4-15 % $Na_2O$.

4. Process according to Claim 2, characterised in that the additional materials (or doping agents) are mixed in the following molar proportions calculated with respect to the total of the starting materials in moles :
0-5 % $Al_2O_3$, 0-10 % $TiO_2$, 0-10 % $P_2O_5$, 0-15 % $GeO_2$.

5. Process according to Claim 2, characterised in that the starting materials mixed in the first stage correspond to a glass composition defined by the following molar percentages :
57 % $SiO_2$
25 % $B_2O_3$
8 % $Na_2O$
10 % $GeO_2$.

6. Process according to Claim 1, characterised in that the solutions used for the chemical attack in the core and the surface attack in the third stage are acid solutions with normalities between 0.1 and 5 N and temperatures between 70 and 100 °C.

7. Process according to Claim 1, characterised in that the chemical surface attack in the third stage is effected by an ammonia solution having a concentration between 0.1 and 10 % by weight.

8. Process according to Claim 1, characterised in that the chemical surface attack in the third stage is effected by a sodium hydroxide solution having a concentration between 0.01 and 1 % by weight.

9. Process according to Claim 1, characterised in that during the third stage the surface attack of step (b) is carried out to form a complex, starting from the doping agent to be removed, and the complex thus formed then removed by means of a solvent.

10. Process according to Claim 9, characterised in that when the doping agent is germanium oxide the complex is thiodigermanic acid which was formed by immersing the porous glass in alcohol containing hydrogen sulphide.

11. Process according to Claim 1, characterised in that during the third stage the chemical attack agent is allowed to act in the presence of hypophosphorous acid when the doping agent is germanium oxide.

12. Process according to Claim 1, characterised in that during the third stage the step (b) is carried out using a gaseous chemical agent.

13. Process according to Claim 12, characterised in that the chemical agent is a chloride vapour.

14. Process according to Claim 13, characterised in that the chloride is 500 °C hot carbon tetrachloride.

15. Process according to Claim 1, characterised in that the heat treatment for the consolidation is carried out at a temperature between 700 and 1 200 °C for one go several hours.

16. Process according to Claim 1, characterised in that the fourth stage also includes a heat treatment in a controlled atmosphere prior to the consolidation treatment.

17. Process according to Claim 1, characterised in that the blank when it is tubular after the consolidation treatment is treated with the flame for conversion to a solid-wall blank.

18. Process according to Claim 1, characterised in that the glass fibres are obtained directly by drawing the consolidated blank.

19. Process according to Claim 1, characterised in that the glass fibres are obtained by drawing the consolidated blank which has previously been inserted into a glass tube rich in silicon dioxide (about 90 %) whose inner diameter is adapted to the diameter of the blank.

**Ansprüche**

1. Verfahren zur Herstellung von Lichtleitfasern, bestehend aus einem Kern mit radialem Brechungsindexgradient, der von einer lichtleitenden Hülle umgeben ist, wobei zuvor ein Rohling mit größeren Durchmesser als derjenige der Faser hergestellt wird, und wobei das Verfahren die folgenden Stufen umfaßt :
— eine erste Stufe der Herstellung einer Glasschmelze, ausgehend von Ausgangsstoffen, die eine Glaszusammensetzung bilden können, welche sich in zwei feste, untereinander verbundene und zusammenhängende Phasen unterschiedlicher Zusammensetzung auftrennt, wobei diese Ausgangsstoffe in der ersten Stufe mit Dotierungsmitteln versetzt werden, welche den Brechungsindex des Glases erhöhen können ;
— eine zweite Stufe, bestehend aus einem ersten Abschnitt des Ziehens eines Rohlings aus der Glasschmelze und einem zweiten Abschnitt, bestehend aus mindestens einer Glühung, wobei letztere die beiden festen, untereinander verbundenen und zusammenhängenden Phasen verschiedener Zusammensetzung auftreten läßt, nämlich eine harte Phase reich an Siliciumdioxid und eine weiche Phase arm an Siliciumdioxid, wobei die weiche Phase den Hauptanteil der Verunreinigungen der Ausgangsschmelze aufnimmt ;
— eine dritte Stufe, bestehend aus einem chemischen Angriff im Kern der Rohlings zur Entfernung der weichen Phase und der darin enthaltenen Verunreinigungen unter Verbleib des aus der weichen Phase stammenden Dotierungsmittels als Rückstand des chemischen Angriffs, wobei das Dotierungsmittel zunimmt, wenn man von außen zum Kern des Rohlings vordringt ;
— eine vierte Stufe, bestehend aus einer Wärmebehandlung zur Verfestigung des Rohlings, dadurch gekennzeichnet, daß :
— in der ersten Stufe die Ausgangsstoffe einen Gehalt an Verunreinigungen von unter $10^{-4}$, berechnet unter Berücksichtigung der molaren Anteile von Oxiden von sogenannten Übergangsmetallen, aufweisen ;
— die dritte Stufe noch einen chemischen Oberflächenangriff zur Herabsetzung der Konzentration an Dotierungsmittel an der Peripherie des Rohlings umfaßt ;
— die vierte Stufe einen ersten Trocknungsabschnitt umfaßt, bestehend aus einer Vortrocknungs-Unterstufe und einer Trocknungs-Unterstufe, wobei der Rohling fortschreitend auf eine Temperatur zwischen 500 und 750 °C gebracht und mehrere Stunden bis zu mehreren Tagen auf dieser Temperatur gehalten wird.

2. Verfahren nach Anspruch 1, dadurch gekennzeichnet, daß die in der ersten Stufe verwendeten Ausgangsstoffe vorherbestimmte Mengen von Grundstoffen, bestehend aus Silicium-, Bor-, Natrium- und gegebenenfalls Kaliumoxid, und Zusatzstoffe (oder Dotierungsmittel), bestehend aus mindestens einem Oxid von Germanium, Titan, Phosphor und Aluminium, umfassen.

3. Verfahren nach Anspruch 2, dadurch gekennzeichnet, daß die Ausgangsgrundstoffe in den folgenden Anteilen gemischt werden :
35-70 % $SiO_2$, 17-42 % $B_2O_3$, 4-15 % $Na_2O$.

4. Verfahren nach Anspruch 2, dadurch gekennzeichnet, daß die zusätzlichen Stoffe (oder Dotierungsmittel) in den folgenden molaren Anteilen, berechnet in Bezug auf die Gesamtheit der Ausgangsstoffe in Mol, gemischt werden :
0-5 % $Al_2O_3$, 0-10 % $TiO_2$, 0-10 % $P_2O_5$, 0-15 % $GeO_2$.

5. Verfahren nach Anspruch 2, dadurch gekennzeichnet, daß die in der ersten Stufe gemischten Ausgangsstoffe einer durch die folgenden Molprozent definierten Glaszusammensetzung entsprechen :
57 % $SiO_2$
25 % $B_2O_3$
8 % $Na_2O$
10 % $GeO_2$.

6. Verfahren nach Anspruch 1, dadurch gekennzeichnet, daß die für den chemischen Angriff im Kern und den oberflächlichen Angriff in der dritten Stufe verwendeten Lösungen saure Lösungen mit Normalitäten zwischen 0,1 und 5 N sind und Temperaturen zwischen 70 und 100 °C aufweisen.

7. Verfahren nach Anspruch 1, dadurch gekennzeichnet, daß der chemische Oberflächenangriff in der dritten Stufe durch eine ammoniakalische Lösung mit einer Konzentration zwischen 0,1 und 10 Gew. % erfolgt.

8. Verfahren nach Anspruch 1, dadurch gekennzeichnet, daß der chemische Oberflächenangriff in der dritten Stufe durch eine Natriumhydroxidlösung mit einer Konzentration zwischen 0,01 und 1 Gew. % erfolgt.

9. Verfahren nach Anspruch 1, dadurch gekennzeichnet, daß man während der dritten Stufe den Oberflächenangriff des Abschnitts (b) unter Bildung eines Komplexes, ausgehend von dem zu entfernenden Dotierungsmittel, durchführt und dann den so gebildeten Komplex mittels eines Lösungsmittels entfernt.

10. Verfahren nach Anspruch 9, dadurch gekennzeichnet, daß, wenn das Dotierungsmittel Germaniumoxid ist, der Komplex Thiodigermaniumsäure ist, welche durch Eintauchen des porösen Glases in Schwefelwasserstoff enthaltenden Alkohol gebildet wurde.

11. Verfahren nach Anspruch 1, dadurch gekennzeichnet, daß man während der dritten Stufe die chemischen Angriffsmittel in Anwesenheit von Hypophosphorsäure einwirken läßt, wenn das Dotierungsmittel Germaniumoxid ist.

12. Verfahren nach Anspruch 1, dadurch gekennzeichnet, daß während der dritten Stufe der Abschnitt (b) unter Verwendung eines gasförmigen chemischen Angriffsmittels durchgeführt wird.

13. Verfahren nach Anspruch 12, dadurch gekennzeichnet, daß das chemische Angriffsmittel ein Chloriddampf ist.

14. Verfahren nach Anspruch 13, dadurch gekennzeichnet, daß das Chlorid 500 °C heißer Tetrachlorkohlenstoff ist.

15. Verfahren nach Anspruch 1, dadurch gekennzeichnet, daß die Wärmebehandlung zur Verfestigung bei einer Temperatur zwischen 700 und 1 200 °C während einer bis zu mehreren Stunden durchgeführt wird.

16. Verfahren nach Anspruch 1, dadurch gekennzeichnet, daß die vierte Stufe noch eine Wärmebehandlung in geregelter Atmosphäre vor der Verfestigungsbehandlung umfaßt.

17. Verfahren nach Anspruch 1, dadurch gekennzeichnet, daß der Rohling, wenn er rohrförmig ist, nach der Verfestigungsbehandlung zur Umwandlung in einen vollwandigen Rohling mit der Flamme behandelt wird.

18. Verfahren nach Anspruch 1, dadurch gekennzeichnet, daß Glasfasern direkt durch Ziehen des verfestigten Rohlings erhalten werden.

19. Verfahren nach Anspruch 1, dadurch gekennzeichnet, daß Glasfasern durch Ziehen des verfestigten Rohlings, welcher zuvor in ein an Siliciumdioxid reiches (etwa 90 %) Glasrohr gesteckt wurde, dessen Innendurchmesser an den Durchmesser des Rohlings angepaßt ist, erhalten werden.

Fig. 1

Fig. 2

Fig. 3